# EUROPEAN PATENT APPLICATION

(11) **EP 4 621 920 A1**
(43) Date of publication of application: **24.09.2025**
(21) Application number: 24868571.1
(22) Date of filing: 10.09.2024
(51) Int. Cl.: H01M 10/0587, H01M 10/052, H01M 4/525, H01M 4/38

(54) **NONAQUEOUS ELECTROLYTE AND LITHIUM SECONDARY BATTERY COMPRISING SAME**

(30) Priority: 21.09.2023 KR 20230126663; 09.09.2024 KR 20240122725
(71) Applicant: LG Energy Solution, Ltd., Seoul 07335 (KR)
(72) Inventor: HEO, Eun Seon, Daejeon 34122 (KR); LEE, Chul Haeng, Daejeon 34122 (KR); LEE, Jung Min, Daejeon 34122 (KR); BAEK, Ga Young, Daejeon 34122 (KR); CHO, Yoon Gyo, Daejeon 34122 (KR)
(74) Representative: Hoffmann Eitle
(86) International application number: PCT/KR2024/013744
(87) International publication number: WO 2025/063593

(57) **Abstract**

The present invention provides a nonaqueous electrolyte comprising: a lithium salt; an organic solvent; and a compound represented by chemical formula 1. [Chemical formula 1] In chemical formula 1, each of R₁ to R₅ is independently any one selectred from the group consisting of H, F, a nitrile group, a C2-10 alkoxycarbonyl group, a C2-10 alkylcarbonyl group, a C1-10 alkyl group, a C2-10 alkenyl group and a C2-10 alkynyl group, and n is an integer of 1 to 5.

## Description

### TECHNICAL FIELD

### [Cross-reference to Related Applications]

This application claims the benefit of Korean Patent Application Nos. 10-2023-0126663, filed on September 21, 2023, and 10-2024-0122725, filed on September 9, 2024 in the Korean Intellectual Property Office, the contents of which are incorporated herein by reference.

### [Technical Field]

The present invention relates to a non-aqueous electrolyte and a lithium secondary battery comprising the same.

### BACKGROUND ART

Recently, as the application areas of lithium secondary batteries have rapidly expanded from power supply for electronic devices such as electric, electronic, communication, and computers to power storage and supply for large-area devices such as automobiles and power storage devices, the demand for high-capacity, high-output, and high-stability secondary batteries is increasing.

In particular, high-capacity, high-output, and long-life characteristics are becoming important for lithium secondary batteries for automobiles. In order to increase the capacity of secondary batteries, nickel-rich positive electrode active materials with high energy density but low stability may be used, or secondary batteries may be driven at high voltages.

However, in the case of driving secondary batteries under the above conditions, as charge and discharge progress, a coated film formed on the positive/negative electrode surface or the electrode surface structure may deteriorate due to side reactions caused by the deterioration of an electrolyte, and transition metal ions may be eluted from the positive electrode surface. In this way, if the eluted transition metal ions are electro-deposited on the negative electrode, the passivation ability of SEI may be deteriorated, which causes the negative electrode to deteriorate.

The deterioration phenomenon of the secondary battery tends to accelerate if the potential of the positive electrode increases or if the battery is exposed to high temperatures.

In addition, if a lithium ion battery is used continuously for a long time or is left at a high temperature, gas is generated, causing the thickness of the battery to increase, which is called a swelling phenomenon. The amount of gas generated in this case is known to be determined by the state of the SEI.

Therefore, in order to solve this problem, research and development are being attempted on a method that suppresses the elution of metal ions from the positive electrode and forms a stable SEI film on the negative electrode, thereby reducing the swelling phenomenon of the secondary battery and increasing stability at high temperatures.

### DISCLOSURE OF THE INVENTION

### TECHNICAL PROBLEM

As a result of conducting a multifaceted study to solve the above problems, the present invention tends to provide an additive for a non-aqueous electrolyte that may suppress the deterioration of a positive electrode, reduce side reactions between a positive electrode and an electrolyte, and form a stable SEI film on a negative electrode.

In addition, the present invention tends to provide a non-aqueous electrolyte having improved stability at high temperatures by including the additive for a non-aqueous electrolyte.

Also, the present invention tends to provide a lithium secondary battery having improved high-temperature cycle characteristics and high-temperature storage characteristics by including the non-aqueous electrolyte, thereby improving overall performance.

### TECHNICAL SOLUTION

[1] The present invention provides a non-aqueous electrolyte comprising: a lithium salt; an organic solvent; and a compound represented by Formula 1 below. 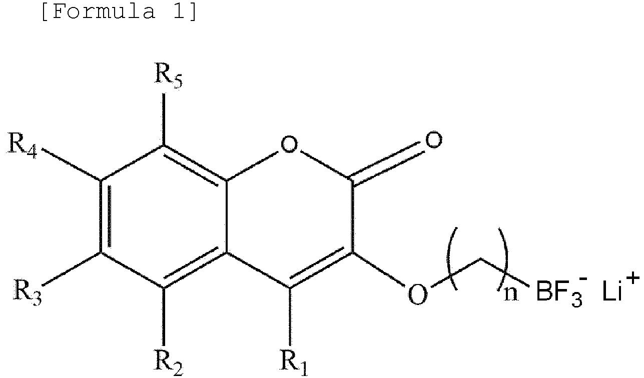 In Formula 1, R₁ to R₅ are each independently one selected from the group consisting of H, F, a nitrile group, an alkoxycarbonyl group of 2 to 10 carbon atoms, an alkylcarbonyl group of 2 to 10 carbon atoms, an alkyl group of 1 to 10 carbon atoms, an alkenyl group of 2 to 10 carbon atoms, and an alkynyl group of 2 to 10 carbon atoms, and n is an integer among 1 to 5.
[2] The present invention may provide the non-aqueous electrolyte according to [1], wherein the compound of Formula 1 is represented by Formula 1-1 below. 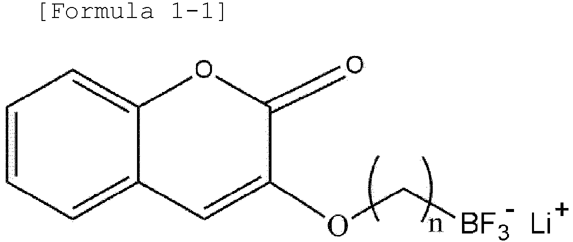 In Formula 1-1, n is an integer among 1 to 5.
[3] The present invention may provide the non-aqueous electrolyte according to [1], wherein the compound of Formula 1 is one selected from the group consisting of Formula 1-2a to Formula 1-2f below. 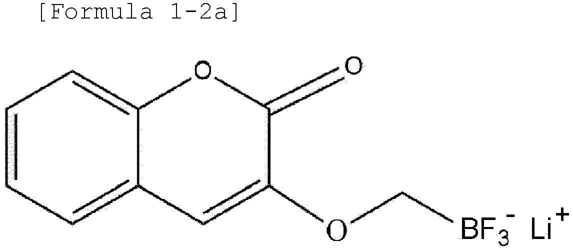 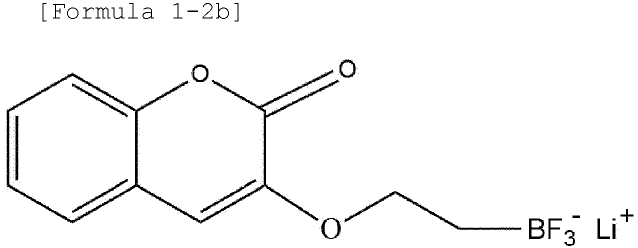 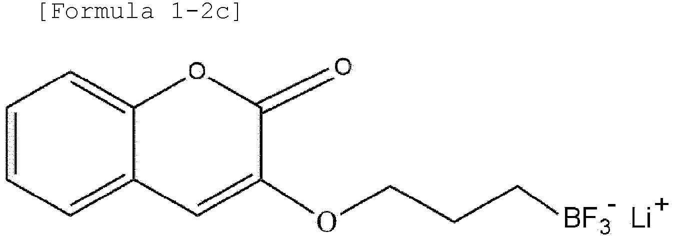 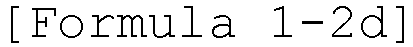 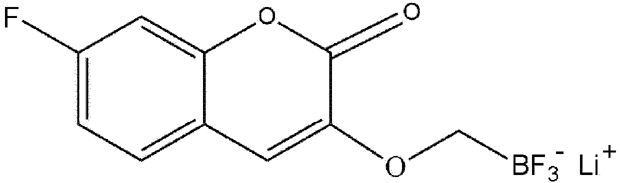 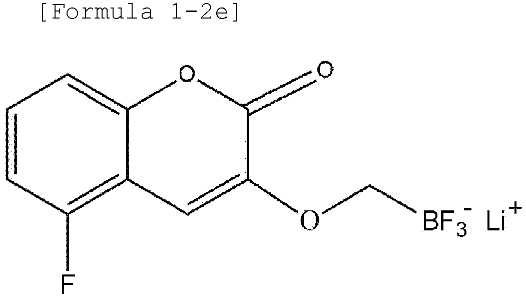 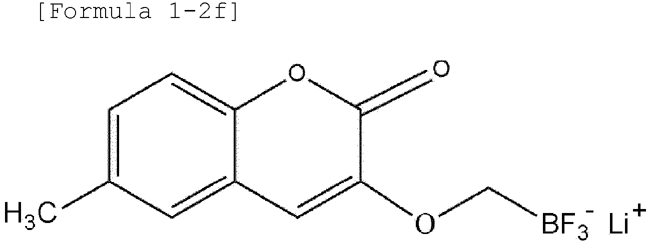
[4] The present invention may provide the non-aqueous electrolyte according to any one of [1] to [3], wherein the compound of Formula 1 is comprised in 0.01 parts by weight to 10 parts by weight based on 100 parts by weight of the non-aqueous electrolyte.
[5] The present invention may provide the non-aqueous electrolyte according to any one of [1] to [4], wherein the lithium salt is comprised in a concentration of 0.5 M to 2.0 M.
[6] The present invention may provide the non-aqueous electrolyte according to any one of [1] to [5], wherein the lithium salt is one or more selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiN(SO₂F)₂, LiN(SO₂CF₂CF₃)₂ and LiN(SO₂CF₃)₂.
[7] The present invention may provide the non-aqueous electrolyte according to any one of [1] to [6], wherein the organic solvent comprises at least one or more organic solvents selected from the group consisting of a cyclic carbonate-based organic solvent, a linear carbonate-based organic solvent, a linear ester-based organic solvent and a cyclic ester-based organic solvent.
[8] The present invention may provide the non-aqueous electrolyte according to any one of [1] to [7], further comprising one or more compounds selected from the group consisting of a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound and a lithium salt-based compound as an additive.
[9] The present invention may provide a lithium secondary battery comprising: a positive electrode; a negative electrode; and the non-aqueous electrolyte according to any one of [1] to [7].
[10] The present invention may provide the lithium secondary battery according to [9], wherein the positive electrode comprises a lithium nickel-based oxide represented by [Formula 2] below as a positive electrode active material.

   [Formula 2] LiₓNiₐCo_{b}M¹_{c}M²_{d}O₂

   In Formula 2, M¹ is Mn, Al or a combination thereof, M² is one or more selected from the group consisting of Zr, W, Y, Ba, Ca, Ti, Mg, Ta and Nb, 0.8≤x≤1.2, 0.8≤a<1, 0<b<0.2, 0<c<0.2, and 0≤d≤0.1.
[11] The present invention may provide the lithium secondary battery according to [9] or [10], wherein the negative electrode comprises SiOₓ (0≤x<2) as a negative electrode active material.

### ADVANTAGEOUS EFFECTS

The compound represented by Formula 1 provided as an additive for a non-aqueous electrolyte of the present invention has coumarin as a basic structure. The compound with the coumarin structure has strong reducibility at a negative electrode, so that a cyclic structure rapidly undergoes a ring-opening reaction in an initial negative electrode film formation reaction. The polymeric film of a polyethylene oxide (PEO) series formed thereby has the characteristic of high elasticity. As a result, the durability of the film is excellent even in a lithium secondary battery including a silicon-based negative electrode active material that causes extreme volume change during charge and discharge, and thus, an effect of excellent life characteristics may be achieved.

In addition, the compound represented by Formula 1 of the present invention may form a radical to promote the reduction reaction of organic solvents or other additives, included in the non-aqueous electrolyte, thereby rapidly forming a film with excellent durability.

Furthermore, the compound represented by Formula 1 of the present invention may form a film that includes an inorganic component such as LiF between polymeric organic films by BF₃⁻ substituted at position 1. Accordingly, the film formed by the compound of Formula 1 may be an organic/inorganic composite film, and may have excellent durability even if exposed to high temperatures or high voltages.

In addition, the compound represented by Formula 1 of the present invention exhibits the characteristics of a Lewis acid in which BF₃⁻ substituted at position 1 may trap anions present in an electrolyte. As a result, the structural transformation of a negative electrode film may be suppressed by stabilizing the anions in the electrolyte, which are Lewis bases, so that the high-temperature storage characteristics of the lithium secondary battery may be improved. In addition, since the reduction product in the electrolyte and the BF₃⁻ substituted at position 1 of the compound represented by Formula 1 form a B-O bond, the interfacial adhesive force at the negative electrode is strengthened, so that the strength of the film derived from the compound of Formula 1 is strengthened. As a result, the durability of the film is excellent in a lithium secondary battery including a silicon-based negative electrode active material that undergoes extreme volume change during charge and discharge, and thus excellent life characteristics may be achieved.

Therefore, by suppressing the deterioration of the passivation ability of SEI at high temperatures, the deterioration of the negative electrode may be prevented, thereby improving the life characteristics of the battery.

That is, by using the non-aqueous electrolyte of the present invention including the compound of Formula 1, a stable electrode-electrolyte interface with low resistance may be formed even at high temperatures, so that high-temperature cycle characteristics and high-temperature storage characteristics may be improved, thereby realizing a lithium secondary battery with improved overall performance.

### BEST MODE FOR CARRYING OUT THE INVENTION

Words or terms used in the present description and claims shall not be interpreted as the meaning defined in commonly used dictionaries. The words or terms should be interpreted as having a meaning that is consistent with the technical idea of the invention, based on the principle that an inventor may properly define the meaning of the words or terms to best explain the invention.

In the specification, the terms "include", "have" or "have" are intended to specify the presence of a feature, number, step, component or a combination thereof, but should be understood as not excluding in advance the possibility of the presence or addition of one or more other features, numbers, steps, components or combinations thereof.

In addition, in the description of "carbon atoms of a to b" in the specification, "a" and "b" refer to the number of carbon atoms included in a specific functional group. That is, the functional group may include "a" to "b" carbon atoms. For example, "an alkylene group of 1 to 5 carbon atoms" refers to an alkylene group including 1 to 5 carbon atoms, i.e., - CH₂-, -CH₂CH₂-, -CH₂CH₂CH₂-, -CH₂(CH₃)CH-, -CH(CH₃)CH₂-,-CH(CH₃)CH₂CH₂- and the like.

In addition, in the specification, all of the alkyl group, alkenyl group, and alkynyl group may be substituted or unsubstituted. The term "substitution", unless otherwise defined, means that at least one or more hydrogen atoms bonded to carbon are substituted with elements other than hydrogen, for example, it means that it is substituted with a halogen atom such as F, and Cl.

Hereinafter, the present invention will be explained more particularly.

The non-aqueous electrolyte, and/or the lithium secondary battery according to the present invention include at least one of the configurations disclosed below, and may include any combination between technically feasible configurations among the configurations below.

### Non-aqueous Electrolyte

The non-aqueous electrolyte of the present invention is characterized by including a compound of Formula 1 below as an additive.

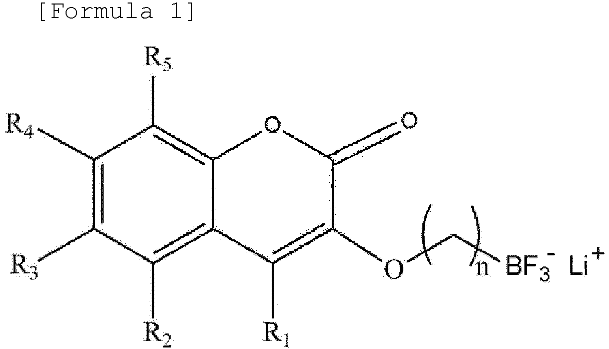

The compound of Formula 1 has coumarin as a basic structure. The compound with a coumarin structure has strong reducibility at a negative electrode, so a cyclic structure rapidly undergoes a ring-opening reaction in an initial negative electrode film formation reaction. The polymer film of a polyethylene oxide (PEO) series formed as a result has the characteristic of high elasticity. As a result, the durability of the film is excellent even in lithium secondary batteries containing a silicon-based negative electrode active material that undergoes extreme volume changes during charge and discharge, resulting in excellent life characteristics.

In addition, the compound represented by Formula 1 of the present invention may form a radical to promote the reduction reaction of organic solvents or other additives included in the non-aqueous electrolyte, thereby rapidly forming a film with excellent durability.

Furthermore, the compound represented by Formula 1 of the present invention may form a film that includes an inorganic component such as LiF between polymeric organic films by BF₃⁻ substituted at position 1. Therefore, the film formed by the compound of Formula 1 becomes an organic/inorganic composite film and has excellent durability even if exposed to high temperatures or high voltages.

In addition, the compound represented by Formula 1 of the present invention may trap anions present in the electrolyte by BF₃⁻ substituted at position 1, which exhibits the characteristics of a Lewis acid. As a result, by stabilizing anions in the electrolyte, which are Lewis bases, structural deterioration of the negative electrode film may be suppressed, so that the high-temperature storage characteristics of the lithium secondary battery may be improved. In addition, since the BF₃⁻ substituted at position 1 of the compound represented by Formula 1 and the reduction product in the electrolyte form a B-O bond to strengthen the interfacial adhesion at the negative electrode, there is a characteristic that the strength of the film derived from the compound of Formula 1 is increased. As a result, the durability of the film is excellent even in a lithium secondary battery containing a silicon-based negative electrode active material that causes extreme volume change during charge and discharge, and thus the life characteristics are excellent.

Therefore, by suppressing the deterioration of the passivation ability of SEI at high temperatures, the deterioration of the negative electrode may be prevented, and thus the life characteristics of the battery may be improved.

In Formula 1, R₁ to R₅ are each independently one selected from the group consisting of H, F, a nitrile group, an alkoxycarbonyl group of 2 to 10 carbon atoms, an alkylcarbonyl group of 2 to 10 carbon atoms, an alkyl group of 1 to 10 carbon atoms, an alkenyl group of 2 to 10 carbon atoms, and an alkynyl group of 2 to 10 carbon atoms, preferably, one selected from the group consisting of H, F, a nitrile group and an alkyl group of 1 to 5 carbon atoms.

In Formula 1, n is an integer among 1 to 5, and preferably, n may be an integer among 1 to 3.

Preferably, the compound of Formula 1 may be represented by Formula 1-1 below.

[Formula 1-1]

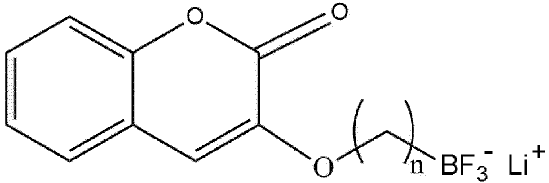

In Formula 1-1, n is an integer among 1 to 5, and preferably, n may be an integer among 1 to 3.

The additive for the non-aqueous electrolyte according to the present invention may be one selected from the group consisting of Formula 1-2a to Formula 1-2f below.

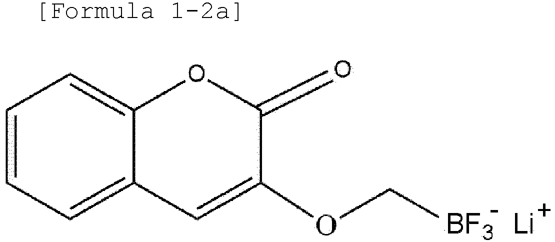

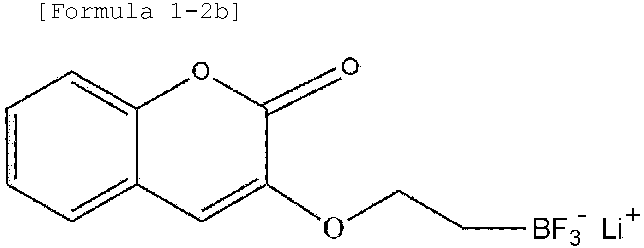

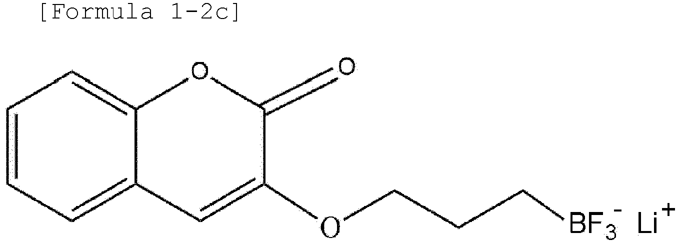

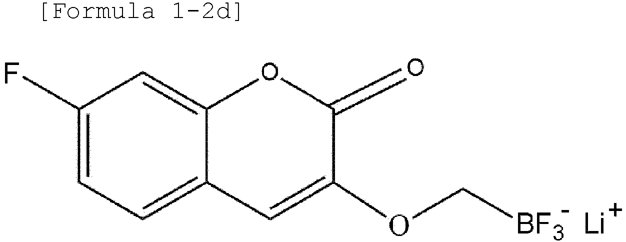

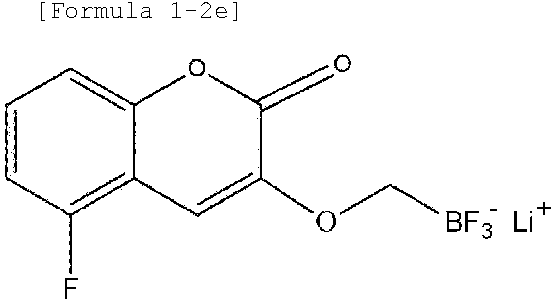

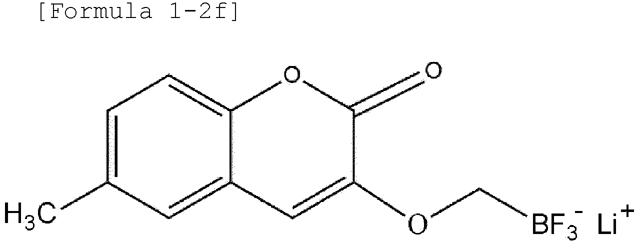

The additive for the non-aqueous electrolyte according to the present invention may be included in an amount of 0.01 parts by weight to 10 parts by weight, 0.1 parts by weight to 5 parts by weight, 0.1 parts by weight to 4 parts by weight, 0.3 parts by weight to 2 parts by weight, or 0.5 parts by weight to 1.0 part by weight based on 100 parts by weight of the non-aqueous electrolyte. If the content of the compound represented by Formula 1 satisfies the above range, the effect of forming a film on the positive electrode is sufficient, so that the elution of the transition metal from the positive electrode active material is suppressed, and the viscosity of the electrolyte is maintained at an appropriate level, so that the rate characteristics or life characteristics are excellent during high-temperature storage.

The non-aqueous electrolyte according to the present invention may further include a lithium salt, an organic solvent, or other electrolyte additives.

The lithium salt is used as an electrolyte salt in a lithium secondary battery and is used as a medium for transporting ions. Generally, the lithium salt includes as a cation, Li⁺ and as an anion, at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻.

Specifically, the lithium salt may include a single material selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, lithium bis (fluorosulfonyl) imide (LiFSI, LiN(SO₂F)₂), lithium bis (perfluoroethanesulfonyl) imide (LiBETI, LiN(SO₂CF₂CF₃)₂) and lithium bis(trifluoromethanesulfonyl)imide (LiTFSI, LiN(SO₂CF₃)₂), or a mixture of two or more thereof. In addition, lithium salts commonly used in the electrolyte of a lithium secondary battery may be used without limitation.

The lithium salt may be appropriately changed within a generally usable range, but in order to obtain an optimal effect of forming a film for preventing corrosion of the electrode surface, the lithium salt may be included in the electrolyte at a concentration of 0.5 M to 2.0 M, preferably, at a concentration of 0.5 M to 1.8 M, and more preferably, at a concentration of 0.7 M to 1.6 M. If the concentration of the lithium salt satisfies the above range, the effect of improving the cycle characteristics during high-temperature storage of a lithium secondary battery may be sufficient, and the viscosity of the non-aqueous electrolyte may be appropriate, so that the electrolyte impregnation property may be improved.

The non-aqueous organic solvent may include at least one organic solvent selected from the group consisting of a cyclic carbonate-based organic solvent, a linear carbonate-based organic solvent, a linear ester-based organic solvent, and a cyclic ester-based organic solvent.

Specifically, the organic solvent may include a cyclic carbonate-based organic solvent, a linear carbonate-based organic solvent, or a mixed organic solvent thereof.

The cyclic carbonate-based organic solvent is an organic solvent having a high viscosity and a high dielectric constant, which may easily dissociate a lithium salt in an electrolyte. Specific examples thereof include at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and among them, ethylene carbonate may be included.

In addition, the linear carbonate-based organic solvent is an organic solvent having low viscosity and low dielectric constant, and representative examples thereof include at least one organic solvent selected from the group consisting of dimethyl carbonate (DMC), diethyl carbonate (DEC), dipropyl carbonate, ethyl methyl carbonate (EMC), methyl propyl carbonate, and ethyl propyl carbonate, and specifically, ethyl methyl carbonate (EMC) may be included.

In addition, the organic solvent may additionally include at least one ester-based organic solvent selected from the group consisting of a linear ester-based organic solvent and a cyclic ester-based organic solvent in addition to at least one carbonate-based organic solvent selected from the group consisting of the cyclic carbonate-based organic solvent and the linear carbonate-based organic solvent, in order to produce an electrolyte having high ion conductivity.

The linear ester-based organic solvent may be, as a specific example, at least one organic solvent selected from the group consisting of methyl acetate, ethyl acetate, propyl acetate, methyl propionate, ethyl propionate, propyl propionate, and butyl propionate.

In addition, the cyclic ester-based organic solvent may be at least one organic solvent selected from the group consisting of γ-butyrolactone, γ-valerolactone, γ-caprolactone, σ-valerolactone, and ε-caprolactone.

Meanwhile, the organic solvent may be used by adding an organic solvent commonly used in a non-aqueous electrolyte without limitation, if necessary. For example, at least one organic solvent among an ether-based organic solvent, a glyme-based solvent, and a nitrile-based organic solvent may be additionally included.

The ether-based solvent may be any one selected from the group consisting of dimethyl ether, diethyl ether, dipropyl ether, methyl ethyl ether, methyl propyl ether, ethyl propyl ether, 1,3-dioxolane (DOL), and 2,2-bis(trifluoromethyl)-1,3-dioxolane (TFDOL), or a mixture of two or more thereof, but is not limited thereto.

The glyme-based solvent has a high dielectric constant and low surface tension compared to linear carbonate-based organic solvent, and is a solvent having low reactivity with metals, and may include at least one selected from the group consisting of dimethoxyethane (glyme, DME), diethoxyethane, diglyme, tri-glyme, and tetra-glyme (TEGDME), but is not limited thereto.

The nitrile-based solvent may be at least one selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenyl acetonitrile, and 4-fluorophenyl acetonitrile, but is not limited thereto.

In addition, the non-aqueous electrolyte of the present invention may additionally include a known electrolyte additive in the non-aqueous electrolyte, if necessary, in order to prevent the non-aqueous electrolyte from being decomposed in a high-output environment to cause negative electrode collapse, or to further improve low-temperature high-rate discharge characteristics, high-temperature stability, overcharge prevention, and high-temperature battery expansion suppression effects.

The other electrolyte additives may include at least one SEI film-forming additive selected from the group consisting of a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound, and a lithium salt-based compound, as representative examples.

The cyclic carbonate-based compound may include vinylene carbonate (VC) or vinylethylene carbonate.

The halogen-substituted carbonate-based compound may include fluoroethylene carbonate (FEC).

The sultone-based compound may include at least one compound selected from the group consisting of 1,3-propane sultone (PS), 1,4-butane sultone, ethene sultone, 1,3-propene sultone (PRS), 1,4-butene sultone, and 1-methyl-1,3-propene sultone.

The sulfate-based compound may include ethylene sulfate (Esa), trimethylene sulfate (TMS), or methyl trimethylene sulfate (MTMS).

The phosphate-based compound may include at least one compound selected from the group consisting of lithium difluoro(bisoxalato)phosphate, lithium difluorophosphate, tris(trimethylsilyl)phosphate, tris(trimethylsilyl)phosphite, tris(2,2,2-trifluoroethyl)phosphate, and tris(2,2,2-trifluoroethyl)phosphite.

The borate-based compound may include tetraphenylborate, lithium oxalyldifluoroborate (LiODFB), and lithium bisoxalatoborate (LiB(C₂O₄)₂, LiBOB).

The nitrile-based compound may include at least one compound selected from the group consisting of succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenyl acetonitrile, and 4-fluorophenyl acetonitrile.

The benzene-based compound may include fluorobenzene, the amine-based compound may include triethanolamine or ethylene diamine, and the silane-based compound may include tetravinylsilane.

The lithium salt-based compound is a compound different from the lithium salt included in the non-aqueous electrolyte, and may include lithium difluorophosphate (LiDFP), LiPO₂F₂, or LiBF₄.

Among the other electrolyte additives, if a combination of vinylene carbonate (VC), 1,3-propane sultone (PS), ethylene sulfate (Esa), and lithium difluorophosphate (LiDFP) is additionally included, a more solid SEI film may be formed on the surface of the negative electrode during the initial activation process of the secondary battery, and gas generation that may be generated due to decomposition of the electrolyte at high temperatures may be suppressed, thereby improving the high-temperature stability of the secondary battery.

Meanwhile, two or more of the other electrolyte additives may be mixed and used, and may be included in an amount of 0.01 to 30 wt%, specifically 0.1 to 25 wt%, and preferably 1 to 20 wt%, based on the total weight of the non-aqueous electrolyte. If the content of the other electrolyte additives satisfies the above range, the effect of improving ion conductivity and cycle characteristics is more excellent.

### Lithium Secondary Battery

The present invention also provides a lithium secondary battery including the non-aqueous electrolyte.

Specifically, the lithium secondary battery includes a positive electrode including a positive electrode active material, a negative electrode including a negative electrode active material, a separator interposed between the positive electrode and the negative electrode, and the non-aqueous electrolyte described above.

In this case, the lithium secondary battery of the present invention may be manufactured according to a common method known in the art. For example, a positive electrode, a negative electrode, and a separator interposed between the positive electrode and the negative electrode are sequentially stacked to form an electrode assembly, and then the electrode assembly is inserted into a battery case and the non-aqueous electrolyte according to the present invention is injected to manufacture the battery.

### (1) Positive Electrode

The positive electrode may be manufactured by coating a positive electrode mixture slurry containing a positive electrode active material, a binder, a conductive material, and a solvent on a positive electrode current collector.

The positive electrode current collector is not particularly limited as long as it has conductivity without causing a chemical change in the battery, and for example, stainless steel, aluminum, nickel, titanium, fired carbon, or aluminum or stainless steel, surface-treated with carbon, nickel, titanium, silver, or the like may be used.

The positive electrode active material is a compound capable of reversible intercalation and deintercalation of lithium, and specifically, may include a lithium metal oxide containing one or more metals such as cobalt, manganese, nickel, or aluminum and lithium. More specifically, the lithium metal oxide is a lithium-manganese-based oxide (e.g., LiMnO₂ and LiMn₂O₄), a lithium-cobalt-based oxide (e.g., LiCoO₂), a lithium-nickel-based oxide (e.g., LiNiO₂), a lithium-nickel-manganese-based oxide (e.g., LiNi_{1-y}Mn_{y}O₂, where 0<Y<1, and LiMn_{2-Z}Ni_{Z}O₄, where 0<Z<2), a lithium-nickel-cobalt-based oxide (e.g., LiNi_{1-Y1}Co_{Y1}O₂, where 0<Y1<1), a lithium-manganese-cobalt-based oxide (e.g., LiCo_{1-Y2}Mn_{Y2}O₂, where 0<Y2<1, and LiMn_{2-Z1}Co_{Z1}O₄, where 0<Z1<2), a lithium-nickel-manganese-cobalt-based oxide (e.g., Li(NiₚCo_{q}Mnᵣ)O₂, where 0<p<1, 0<q< 1, 0<r<1, and p+q+r=1, and Li(Niₚ₁Co_{q1}Mnᵣ₁)O₄, where 0<p1<2, 0<q1<2, 0<r1<2, and p1+q1+r1=2), or a lithium-nickel-cobalt-transition metal (M) oxide (e.g., Li(Niₚ₂Co_{q2}Mnᵣ₂Mₛ₂)O₂, where M is selected from the group consisting of Al, Fe, V, Cr, Ti, Ta, Mg, and Mo, and p2, q2, r2, and s2 are atomic fractions of independent elements, respectively, 0<p2<1, 0< q2<1, 0<r2<1, 0<s2<1, and p2+q2+r2+s2=1), and any one thereof or two or more compounds thereof may be included.

Among them, in terms of improving the capacity characteristics and stability of the battery, the lithium metal oxide may be LiCoO₂, LiMnO₂, LiNiO₂, a lithium nickel manganese cobalt oxide (e.g., Li (Ni_{1/3}Mn_{1/3}Co_{1/3})O₂, Li(Ni_{0.6}Mn_{0.2}Co_{0.2})O₂, Li(Ni_{0.5}Mn_{0.3}Co_{0.2})O₂, Li (Ni_{0.7}Mn_{0.15}Co_{0.15})O₂ and Li(Ni_{0.8}Mn_{0.1}Co_{0.1})O₂), or a lithium nickel cobalt aluminum oxide (e.g., Li (Ni_{0.8}Co_{0.15}Al_{0.05})O₂), and any one thereof or a mixture of two or more thereof may be used.

Among them, a positive electrode active material having a nickel content of 80 atm% or more may be used in terms of maximizing the capacity characteristics of the battery. For example, the lithium transition metal oxide may include one represented by [Formula 2] below.

[Formula 2] LiₓNiₐCoₑM¹_{c}M²_{d}O₂

In Formula 2, M¹ is at least one selected from Mn and Al, and preferably may be Mn, or a combination of Mn and Al.

M² may be at least one selected from the group consisting of Zr, B, W, Mg, Ce, Hf, Ta, La, Ti, Sr, Ba, F, P, and S.

x represents the atomic fraction of lithium in the lithium transition metal oxide, and may be 0.90≤x≤1.1, preferably 0.95≤x≤1.08, more preferably 1.0≤x≤1.08.

a represents the atomic fraction of nickel among the metal elements excluding lithium in the lithium transition metal oxide, and may be 0.80≤a<1.0, preferably 0.80≤a≤0.95, more preferably 0.80≤a≤0.90. If the nickel content satisfies the above range, high-capacity characteristics may be achieved.

b represents the atomic fraction of cobalt among the metal elements excluding lithium in the lithium transition metal oxide, and may be 0<b<0.2, 0<b≤0.15, or 0.01≤b≤0.10.

c represents the atomic fraction of M¹ among the metal elements excluding lithium in the lithium transition metal oxide, and may be 0<c<0.2, 0<c≤0.15, or 0.01≤c≤0.10.

d represents the atomic fraction of M² among the metal elements excluding lithium in the lithium transition metal oxide, and may be 0≤d≤0.1, or 0≤d≤0.05.

The positive electrode active material may be included in an amount of 60 to 99 wt%, preferably 70 to 99 wt%, more preferably 80 to 98 wt%, based on the total solid content excluding the solvent in the positive electrode mixture slurry.

The binder is a component that assists in the bonding of the active material and the conductive material and the bonding to the current collector.

Examples of the binder include polyvinylidene fluoride, polyvinyl alcohol, carboxymethyl cellulose (CMC), starch, hydroxypropyl cellulose, regenerated cellulose, polyvinyl pyrrolidone, polytetrafluoroethylene, polyethylene (PE), polypropylene, an ethylene-propylene-diene monomer, a sulfonated ethylene-propylene-diene monomer, styrene-butadiene rubber, fluorine rubber, various copolymers thereo f, or the like.

Typically, the binder may be included in an amount of 1 to 20 wt%, preferably 1 to 15 wt%, and more preferably 1 to 10 wt%, based on the total weight of the solid content excluding the solvent in the positive electrode mixture slurry.

The conductive material is a component for further improving the conductivity of the positive electrode active material, and may be added at 1 to 20 wt% based on the total solid content in the positive electrode mixture slurry. The conductive material is not particularly limited as long as it has conductivity without causing a chemical change in the battery, and for example, carbon powder such as carbon black, acetylene black, Ketjen black, channel black, furnace black, lamp black, or thermal black; graphite powder such as natural graphite, artificial graphite, or graphite with a highly developed crystal structure; conductive fibers such as carbon fibers or metal fibers; fluorinated carbon powder; conductive powder such as aluminum powder or nickel powder; conductive whiskers of zinc oxide or potassium titanate; conductive metal oxides such as titanium oxide; conductive materials such as polyphenylene derivatives, or the like may be used.

Typically, the conductive material may be included in an amount of 1 to 20 wt%, preferably 1 to 15 wt%, and more preferably 1 to 10 wt%, based on the total solid content excluding the solvent in the positive electrode mixture slurry.

The solvent may include an organic solvent such as N-methyl-2-pyrrolidone (NMP), and may be used in an amount that provides a desirable viscosity if including the positive electrode active material, and optionally the binder and the conductive material. For example, the solvent may be included such that the concentration of the solid content including the positive electrode active material, and optionally the binder and the conductive material may be 50 to 95 wt%, preferably 70 to 95 wt%, and more preferably 70 to 90 wt%.

### (2) Negative Electrode

The negative electrode may be manufactured by, for example, coating a negative electrode mixture slurry containing a negative electrode active material, a binder, a conductive material, and a solvent on a negative electrode current collector, or a graphite electrode made of carbon (C) or a metal itself may be used as the negative electrode.

For example, if manufacturing the negative electrode by coating a negative electrode mixture slurry on the negative electrode current collector, the negative electrode current collector generally has a thickness of 3 to 500 µm. The negative electrode current collector is not particularly limited as long as it has high conductivity without causing a chemical change in the battery, and for example, copper, stainless steel, aluminum, nickel, titanium, fired carbon, copper or stainless steel, surface-treated with carbon, nickel, titanium, silver, or the like, an aluminum-cadmium alloy, or the like may be used. In addition, like the positive electrode current collector, the bonding strength of the negative electrode active material may be strengthened by forming fine irregularities on the surface, and the negative electrode current collector may be used in various forms such as a film, sheet, foil, net, porous body, foam, and non-woven fabric.

In addition, the negative electrode active material may include at least one selected from the group consisting of a lithium metal, a carbon material capable of reversibly intercalating/deintercalating lithium ions, a metal or an alloy of the metals with lithium, a metal composite oxide, a material capable of doping and dedoping lithium, and a transition metal oxide.

As the carbon material capable of reversibly intercalating/deintercalating lithium ions, any carbon-based negative electrode active material generally used in lithium ion secondary batteries may be used without particular limitation, and representative examples thereof include crystalline carbon, amorphous carbon, or a combination thereof. Examples of the crystalline carbon include graphite such as amorphous, plate-shaped, flake-shaped, spherical, or fiber-shaped natural graphite or artificial graphite, and examples of the amorphous carbon include soft carbon (low-temperature fired carbon) or hard carbon, mesophase pitch carbide, fired coke, or the like.

As the metal or an alloy of the metal with lithium, a metal selected from the group consisting of Cu, Ni, Na, K, Rb, Cs, Fr, Be, Mg, Ca, Sr, Si, Sb, Pb, In, Zn, Ba, Ra, Ge, Al and Sn, or an alloy of the metals with lithium may be used.

As the metal composite oxide, one selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃ (0≤x≤1), LiₓWO₂ (0≤x≤1) and SnₓMe₁₋ₓMe'_{y}O_{z} (Me: Mn, Fe, Pb, Ge; Me': Al, B, P, Si, elements of group 1, group 2, and group 3 of the periodic table, halogen; 0<x≤1; 1≤y≤3; 1≤z≤8) may be used.

The material capable of doping and dedoping the lithium includes Si, SiOₓ (0<x≤2), a Si-Y alloy (where Y is an element selected from the group consisting of alkali metals, alkaline earth metals, group 13 elements, group 14 elements, transition metals, rare earth elements, and combinations thereof, but is not Si), Sn, SnO₂, and Sn-Y (where Y is an element selected from the group consisting of alkali metals, alkaline earth metals, group 13 elements, group 14 elements, transition metals, rare earth elements, and combinations thereof, but is not Sn), and at least one thereof may be mixed with SiO₂ for use. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may be a lithium-containing titanium composite oxide (LTO), vanadium oxide, lithium vanadium oxide, or the like.

The negative electrode active material may be included in an amount of 60 to 99 wt%, preferably 70 to 99 wt%, and more preferably 80 to 98 wt%, based on the total weight of the solid content in the negative electrode mixture slurry.

The binder is a component that assists in bonding between the conductive material, the active material, and the current collector. Examples of the binder include polyvinylidene fluoride (PVDF), polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, an ethylene-propylene-diene monomer, a sulfonated ethylene-propylene-diene monomer, styrene-butadiene rubber, fluorine rubber, and various copolymers thereof.

Typically, the binder may be included in an amount of 1 to 20 wt%, preferably 1 to 15 wt%, and more preferably 1 to 10 wt%, based on the total weight of the solid content in the negative electrode mixture slurry excluding the solvent.

The conductive material is a component for further improving the conductivity of the negative active material, and may be added at 1 to 20 wt% based on the total weight of the solid content in the negative electrode mixture slurry. The conductive material is not particularly limited as long as it has conductivity without causing a chemical change in the battery, and for example, carbon powder of carbon black, acetylene black, Ketjen black, channel black, furnace black, lamp black, or thermal black; graphite powder of natural graphite, artificial graphite, or graphite with a highly developed crystal structure; conductive fibers such as carbon fibers or metal fibers; fluorinated carbon powder; conductive powder such as aluminum powder or nickel powder; conductive whiskers of zinc oxide or potassium titanate; conductive metal oxides such as titanium oxide; conductive materials such as polyphenylene derivatives, or the like may be used.

The conductive material may be included in an amount of 1 to 20 wt%, preferably 1 to 15 wt%, and more preferably 1 to 10 wt%, based on the total weight of the solid content excluding the solvent in the negative electrode mixture slurry.

The solvent may include water or an organic solvent such as N-methyl-2-pyrrolidone (NMP), and may be used in an amount that provides a desirable viscosity if including the negative electrode active material, and optionally the binder and the conductive material. For example, the solvent may be included such that the concentration of the solid content including the negative electrode active material, and optionally the binder and the conductive agent may be 50 to 95 wt%, preferably 70 to 90 wt%.

If the metal itself is used as the negative electrode, the metal thin film itself may be used, or the metal may be physically bonded, rolled, or deposited on the negative electrode current collector. The deposition method may use an electrical deposition method or a chemical vapor deposition method.

For example, the metal thin film itself, or the metal bonded/rolled/deposited on the negative electrode current collector may include one metal or an alloy of two metals selected from the group consisting of lithium (Li), nickel (Ni), tin (Sn), copper (Cu), and indium (In).

### (3) Separator

In addition, as a separator, a common porous polymer film used as a separator in the art, for example, a porous polymer film made of a polyolefin polymer such as an ethylene homopolymer, a propylene homopolymer, an ethylene/butene copolymer, an ethylene/hexene copolymer, and an ethylene/methacrylate copolymer, may be used alone or in a laminated manner, or a conventional porous nonwoven fabric, for example, a nonwoven fabric made of high-melting-point glass fiber, polyethylene terephthalate fiber, or the like may be used, but is not limited thereto. In addition, a coated separator containing a ceramic component or a polymer material may be used to secure heat resistance or mechanical strength, and may optionally be used in a single-layer or multi-layer structure.

The external shape of the lithium secondary battery of the present invention is not particularly limited, but may be a cylindrical shape using a can, a prismatic shape, a pouch shape, or a coin shape.

Hereinafter, the present invention will be described in more detail through specific examples. However, the examples are only examples to help understanding of the present invention and do not limit the scope of the present invention. It is obvious to those skilled in the art that various changes and modifications are possible within the scope and technical idea of this description, and it is natural that such changes and modifications fall within the scope of the appended claims.

### Examples

### Example 1

### (Preparation of Non-aqueous Electrolyte)

LiPF₆ was dissolved in an organic solvent (fluoroethylene carbonate (FEC): ethyl methyl carbonate (EMC): diethyl carbonate (DEC) = 10:45:45 volume ratio) at a concentration of 1.3 M and vinylene carbonate (VC) at a concentration of 0.5 wt% to prepare a non-aqueous solvent, and 0.1 g of a compound of Formula 1-1 was added to 99.9 g of the non-aqueous solvent to prepare a non-aqueous electrolyte.

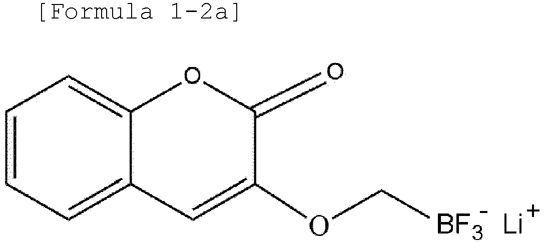

### (Manufacture of Lithium Secondary Battery)

The positive electrode active material (Li Ni_{0.85}Co_{0.05}Mn_{0.07}Al_{0.03}O₂): conductive material (carbon nanotube) : binder (polyvinylidene fluoride) were added in a weight ratio of 97.74:0.70:1.56 to N-methyl-2-pyrrolidone (NMP) as a solvent to prepare a positive electrode slurry (solid content 75.5 wt%). The positive electrode slurry was applied to one surface of a positive electrode current collector (Al thin film) having a thickness of 15 µm, and dried and roll pressed to form a positive electrode.

A negative electrode active material (Si): conductive material (carbon black): binder (styrene-butadiene rubber) were added in a weight ratio of 70.0:20.3:9.7 to H₂O as a solvent, to prepare a negative electrode slurry (solid content 26 wt%). The negative electrode slurry was applied to one side of a negative electrode current collector (Cu thin film) with a thickness of 15 µm, dried, and roll pressed to form a negative electrode.

A polyethylene separator was interposed between the above-formed positive and negative electrodes in a dry room, and the above-prepared non-aqueous electrolyte was injected to manufacture a secondary battery.

### Example 2

A secondary battery was manufactured in the same manner as in Example 1, except that 1.0 g of a compound of Formula 1-2b was added to 99.0 g of the non-aqueous solvent prepared in Example 1 to prepare a non-aqueous electrolyte.

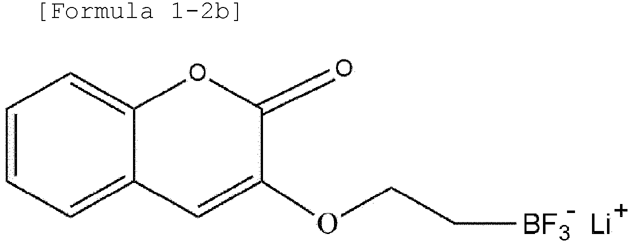

### Example 3

A secondary battery was manufactured in the same manner as in Example 1, except that 2.0 g of a compound of Formula 1-2c was added to 98.0 g of the non-aqueous solvent prepared in Example 1 to prepare a non-aqueous electrolyte.

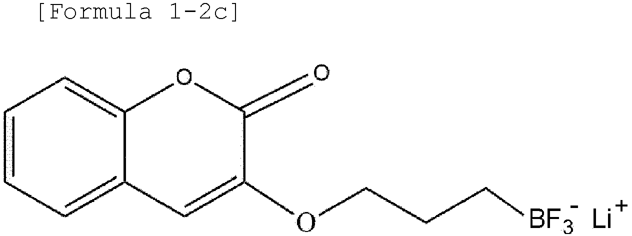

### Example 4

A secondary battery was manufactured in the same manner as in Example 1, except that 1.0 g of a compound of Formula 1-2a was added to 99.0 g of the non-aqueous solvent prepared in Example 1 to prepare a non-aqueous electrolyte.

### Example 5

A secondary battery was manufactured in the same manner as in Example 1, except that 3.0 g of a compound of Formula 1-2a was added to 97.0 g of the non-aqueous solvent prepared in Example 1 to prepare a non-aqueous electrolyte.

### Example 6

A secondary battery was manufactured in the same manner as in Example 1, except that 5.0 g of a compound of Formula 1-2a was added to 95.0 g of the non-aqueous solvent prepared in Example 1 to prepare a non-aqueous electrolyte.

### Comparative Example 1

A secondary battery was manufactured in the same manner as in Example 1, except that a non-aqueous electrolyte was prepared using 100 g of the non-aqueous solvent prepared in Example 1.

### Comparative Example 2

A secondary battery was manufactured in the same manner as in Example 1, except that 0.5 g of a compound of Formula A was added instead of a compound of Formula 1-2a to 99.5 g of the non-aqueous solvent prepared in Example 1 to prepare a non-aqueous electrolyte.

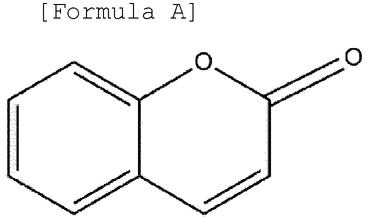

### Experimental Example 1-Evaluation of High Temperature Cycle Characteristics

The cycle characteristics were evaluated for each of the secondary batteries manufactured in Examples 1 to 6 and Comparative Examples 1 and 2.

Specifically, each of the batteries manufactured in Examples 1 to 6 and Comparative Examples 1 and 2 was charged to 4.2 V at 45°C with a constant current of 0.33 C, then charged to 1/40 C with a constant voltage, and discharged to 2.5 V with a constant current of 0.33 C, which constituted one cycle, and then 100 cycles of charge and discharge were performed, and the resistance increase rate compared to the initial resistance after 100 cycles was measured. The results are shown in Table 1 below.

**[Table 1]**

| | Resistance increase rate (%) |
|---|---|
| Example 1 | 50.4 |
| Example 2 | 36.8 |
| Example 3 | 54.9 |
| Example 4 | 47.6 |
| Example 5 | 48.5 |
| Example 6 | 66.2 |
| Comparative Example 1 | 94.6 |
| Comparative Example 2 | 67.3 |

As shown in Table 1, Examples 1 to 6 using the additive for the non-aqueous electrolyte of the present invention had excellent life characteristics because the resistance increase rate was lower than that of Comparative Example 1 without using the additive. In addition, it was confirmed that Examples 1 to 6 using the additive for the non-aqueous electrolyte of the present invention had excellent life characteristics because the resistance increase rate was lower than that of Comparative Example 2 using the additive of Formula A without a substituent containing BF₃⁻ at position 1 of coumarin.

### Experimental Example 2-Evaluation of High Temperature Storage Characteristics

For each of the secondary batteries manufactured in Examples 1 to 6 and Comparative Examples 1 and 2, the high-temperature storage characteristics were evaluated.

Specifically, the secondary batteries of Examples 1 to 6 and Comparative Examples 1 and 2 were each fully charged to 4.2 V and then stored at 60°C for 4 weeks.

Before storage, the volume of the fully charged secondary battery was measured and set as the volume of the initial secondary battery.

After 4 weeks, the volume of the stored secondary battery was measured again and the volume increased during the 4-week storage period was calculated. The percentage ratio of the increased volume to the volume of the initial secondary battery was calculated to derive the volume increase rate after 4 weeks. The results are shown in Table 2 below.

**[Table 2]**

| | Volume increase rate (%) |
|---|---|
| Example 1 | 12.2 |
| Example 2 | 9.6 |
| Example 3 | 6.8 |
| Example 4 | 10.4 |
| Example 5 | 4.3 |
| Example 6 | 3.1 |
| Comparative Example 1 | 16.0 |
| Comparative Example 2 | 24.8 |

As shown in Table 2 above, the secondary batteries of Examples 1 to 6 showed a smaller volume increase rate after 4 weeks and thus less gas generation occurred at high temperatures compared to the secondary battery of Comparative Example 1 that did not use the additive for the non-aqueous electrolyte of the present invention. In addition, it was confirmed that Examples 1 to 6 that used the additive for the non-aqueous electrolyte of the present invention showed a smaller volume increase rate after 4 weeks and thus less gas generation occurred at high temperatures compared to Comparative Example 2 that used the additive of Formula A without a substituent containing BF₃⁻ at position 1 of coumarin.

## Claims

1. A non-aqueous electrolyte comprising:
a lithium salt;
an organic solvent; and
a compound represented by the following Formula 1: 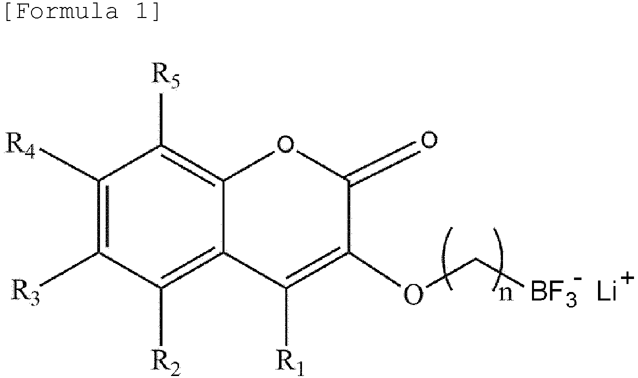
in Formula 1, R₁ to R₅ are each independently one selected from the group consisting of H, F, a nitrile group, an alkoxycarbonyl group of 2 to 10 carbon atoms, an alkylcarbonyl group of 2 to 10 carbon atoms, an alkyl group of 1 to 10 carbon atoms, an alkenyl group of 2 to 10 carbon atoms, and an alkynyl group of 2 to 10 carbon atoms, and
n is an integer among 1 to 5.

2. The non-aqueous electrolyte according to claim 1, wherein the compound of Formula 1 is represented by the following Formula 1-1: 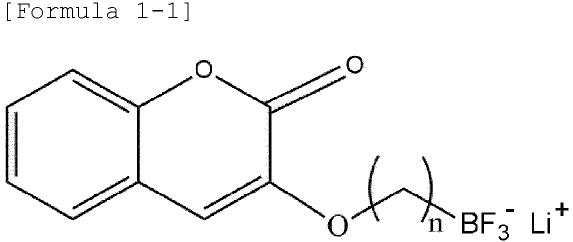 in Formula 1-1, n is an integer among 1 to 5.

3. The non-aqueous electrolyte according to claim 1, wherein the compound of Formula 1 is one selected from the group consisting of the following Formula 1-2a to Formula 1-2f:

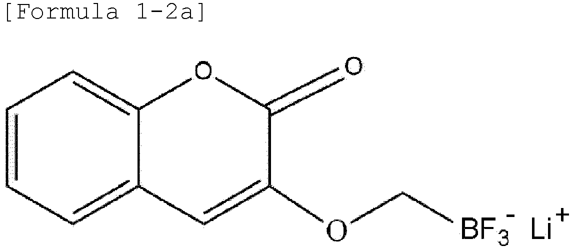

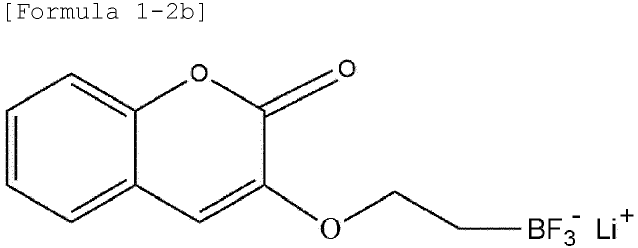

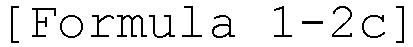

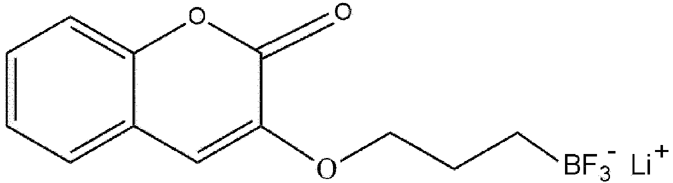

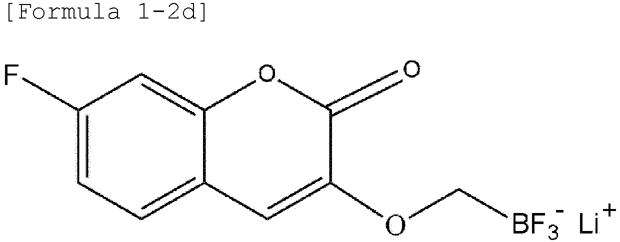

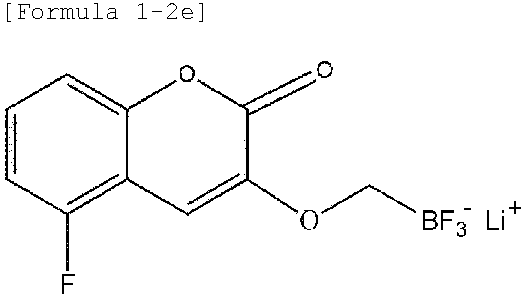

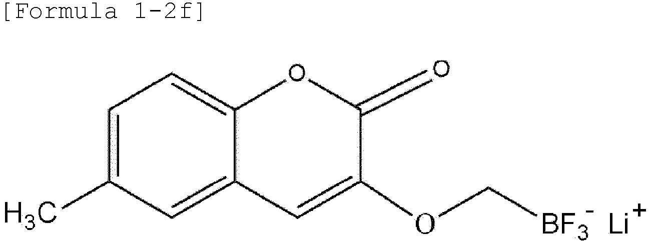

4. The non-aqueous electrolyte according to claim 1, wherein the compound of Formula 1 is comprised in 0.01 parts by weight to 10 parts by weight based on 100 parts by weight of the non-aqueous electrolyte.

5. The non-aqueous electrolyte according to claim 1, wherein the lithium salt is comprised in a concentration of 0.5 M to 2.0 M.

6. The non-aqueous electrolyte according to claim 1, wherein the lithium salt is one or more selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiN(SO₂F)₂, LiN(SO₂CF₂CF₃)₂ and LiN(SO₂CF₃)₂.

7. The non-aqueous electrolyte according to claim 1, wherein the organic solvent comprises at least one or more organic solvents selected from the group consisting of a cyclic carbonate-based organic solvent, a linear carbonate-based organic solvent, a linear ester-based organic solvent and a cyclic ester-based organic solvent.

8. The non-aqueous electrolyte according to claim 1, further comprising one or more compounds selected from the group consisting of a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound and a lithium salt-based compound as an additive.

9. A lithium secondary battery comprising:
a positive electrode;
a negative electrode; and
the non-aqueous electrolyte according to any one of claims 1 to 8.

10. The lithium secondary battery according to claim 9, wherein the positive electrode comprises a lithium nickel-based oxide represented by the following [Formula 2] as a positive electrode active material:
[Formula 2] LiₓNiₐCo_{b}M¹_{c}M²_{d}O₂
in Formula 2, M¹ is Mn, Al or a combination thereof, M² is one or more selected from the group consisting of Zr, W, Y, Ba, Ca, Ti, Mg, Ta and Nb, 0.8≤x≤1.2, 0.8≤a<1, 0<b<0.2, 0<c<0.2, and 0≤d≤0.1.

11. The lithium secondary battery according to claim 9, wherein the negative electrode comprises SiOₓ (0≤x<2) as a negative electrode active material.
